(19) **Europäisches Patentamt European Patent Office Office européen des brevets**

(11) **EP 4 751 851 A1**

(12) # EUROPEAN PATENT APPLICATION

(43) Date of publication:
03.06.2026 Bulletin 2026/23

(21) Application number: 25219733.0

(22) Date of filing: 01.12.2025

(51) International Patent Classification (IPC):
**B25B 23/147** (2006.01)    **G05B 19/4065** (2006.01)

(52) Cooperative Patent Classification (CPC):
**B25B 23/147; G05B 19/4065**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **02.12.2024 SE 2430615**

(71) Applicant: **Atlas Copco Industrial Technique AB 105 23 Stockholm (SE)**

(72) Inventors:
• **Barkefors, Annea**
  **13138 Nacka (SE)**
• **Aldenfalk Jansson Staffan**
  **703 45 Örebro (SE)**
• **Nieto, Stephan**
  **11330 Stockholm (SE)**
• **Englin, Albin**
  **824 55 Hudiksvall (SE)**

(74) Representative: **Atlas Copco Industrial Technique AB 105 23 Stockholm (SE)**

(54)    **DETECTING MAINTENANCE INDICATOR OF TIGHTENING TOOL**

(57)    In an aspect, a method of a device (20, 35) is provided of detecting that a tightening tool (10) should be subjected to maintenance. The method comprises acquiring (S101) data representing at least two selected operational parameters of the tightening tool (10), computing (S102) a tool wear indicator (w) based on a combination of the acquired parameter data, and determining (S103) that the tightening tool (10) should be subjected to maintenance in response to the tool wear indicator (w) exceeding a set maintenance threshold value (T).

*Fig. 2*

## Description

**TECHNICAL FIELD**

The present disclosure relates to a method of detecting that a tightening tool should be subjected to maintenance, and a device performing the method.

Further, a computer program is provided comprising computer-executable instructions for causing the device to perform steps of the method when the computer-executable instructions are executed on a processing unit included in the device.

Moreover, a computer program product is provided comprising a computer readable medium, the computer readable medium having the computer program embodied thereon.

**BACKGROUND**

When utilizing a torque-applying electrical tool such as a tightening tool configured to tightening of fasteners such as bolts or screws, the tool will eventually start to wear, which may lead to inferior-quality tightenings and even tool breakdown.

This may cause production downtime since the tool may have to be taken out of production and subjected to maintenance. To avoid any such scenarios, it is important to detect tool wear at an early state, which in practice is difficult.

**SUMMARY**

One objective is to solve, or at least mitigate, this problem in the art and thus to provide an improved method of detecting that a tightening tool should be subjected to maintenance.

This objective is attained in a first aspect by a method of a device of detecting that a tightening tool should be subjected to maintenance. The method comprising acquiring data representing at least two selected operational parameters of the tightening tool, computing a tool wear indicator (w) based on a combination of the acquired parameter data, and determining that the tightening tool should be subjected to maintenance in response to the tool wear indicator exceeding a set maintenance threshold value.

This objective is attained in a second aspect by a device configured to detect that a tightening tool should be subjected to maintenance, the device comprising a processing unit operative to cause the device to acquire data representing at least two selected operational parameters of the tightening tool, compute a tool wear indicator based on a combination of the acquired parameter data, and determine that the tightening tool should be subjected to maintenance in response to the tool wear indicator exceeding a set maintenance threshold value.

Advantageously, by taking into account a plurality of operational parameters of the tool for computing a wear score, the determining that maintenance is required (and an alert optionally being issued accordingly) will be considered to have a greater weight as compared to an alert issued based on a single operational parameter. Thus, a fuller and more complete view of the health of the tool is advantageously provided with this, which greatly improves ability to detect tool wear at an early state.

In an embodiment, the tool issues an alert indicating that the tool should be subjected to maintenance.

In an embodiment, one or more specific tool parts are identified that should be subjected to maintenance based on the selected operational parameters of the tightening tool.

In an embodiment, the maintenance is scheduled based on an extent to which the computed wear score exceeds the set maintenance threshold value.

In an embodiment, the scheduling comprises indicating a maximum number of tightenings to be performed, or a maximum time period elapsing, before the tightening tool should be subjected to maintenance.

In an embodiment, wherein the determining that the tightening tool should be subjected to maintenance comprises determining that immediate maintenance should be performed if the computed tool wear indicator reaches a predetermined upper value.

In an embodiment, the computing of the tool wear indicator comprises computing a first wear score based on acquired data representing a first of the at least two selected operational parameters, and computing a second wear score based on acquired data representing a second of the at least two selected operational parameters, wherein the tool wear indicator is computed based on a combination of the first wear score and the second wear score.

In an embodiment, the tool wear indicator is computed by adding the first wear score and the second wear score.

In an embodiment, the alert is provided to an operator of the tightening tool via a tool interface.

In an embodiment, the maintenance threshold value is dynamically adjusted based on environmental conditions or specific tightening tool applications.

In an embodiment, the at least two selected operational parameters of the tightening tool comprise two or more of: applied torque, applied rotation angle, overshoot of torque with respect to a desired target torque, consumed tool current, tool temperature, degree of vibrations or noise of the tool, tool events, computed Palmgren-Minter tool wear metrics.

In an embodiment, in in case two or more of the selected operational parameters of the tightening tool individually results in tool wear indicator exceeding the set maintenance threshold value, a weighting factor is selected for further increasing the tool wear indicator.

In a third aspect, a computer program is provided comprising computer-executable instructions for causing a device to perform steps recited in the method of the first aspect when the computer-executable instructions are executed on a processing unit included in the device.

In a fourth aspect, a computer program product is provided comprising a computer readable medium, the computer readable medium having the computer program according to the third aspect embodied thereon.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

## BRIEF DESCRIPTION OF THE DRAWINGS

Aspects and embodiments are now described, by way of example, with reference to the accompanying drawings, in which:

Figure 1 illustrates a tightening tool configured to apply a torque to a fastener, in which tool embodiments may be implemented;

Figure 2 shows a flowchart illustrating a method of detecting that a tightening tool should be subjected to maintenance according to an embodiment;

Figure 3 shows a flowchart illustrating a method of detecting that a tightening tool should be subjected to maintenance according to a further embodiment;

Figure 4 shows a flowchart illustrating a method of detecting that a tightening tool should be subjected to maintenance according to yet a further embodiment;

Figure 5 shows a flowchart illustrating a method of detecting that a tightening tool should be subjected to maintenance according to still a further embodiment; and

Figure 6 illustrates a tightening trace of the tool.

## DETAILED DESCRIPTION

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

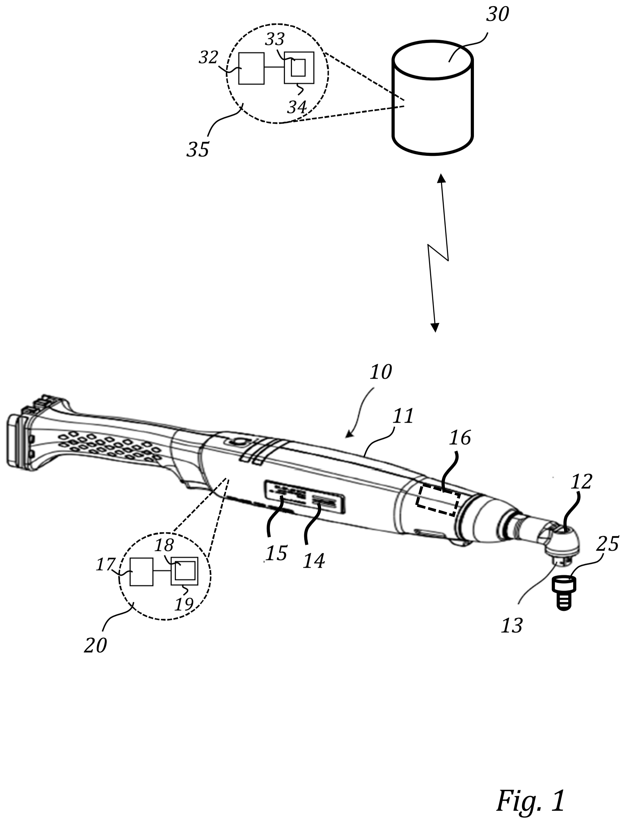

Figure 1 illustrates an industrial tool in the form of a tightening tool 10 configured to apply a torque to a fastener such as a bolt 25 for tightening a joint, for which tool embodiments may be implemented.

The tightening tool 10 may be cordless or electrically powered via a cord and has a main body 11 and a tool head 12. The tool head 12 has an output shaft 13 with a socket (not shown) configured to be rotatably driven by an electric motor 16 arranged inside the main body 11 to apply the torque to the bolt 25.

The tightening tool 10 may be arranged with a display 14 via which an operator of the tool 10 may be presented with information relating to operation of the tool 10, and an interface 15 via which the operator may input data to the tool 10.

The tightening tool 10 may further be equipped with a communication device in the form of a radio transmitter/receiver (not shown) for wirelessly transmitting operational data, such as applied torque, angles and/or current consumption to a remotely located controller such as a cloud server 30 or a device such as a server executing on the premises. Alternatively, communication between the tool 10 and the controller 30 may be undertaken via a wired connection.

Thus, the tool 10 may for instance communicate measured operational data to the controller 30 for further evaluation while the controller 30 e.g. may send operational settings to be applied by the tool 10 or instructions to be displayed to the operator via the display 14, or even automatically configure the tool 10. As is understood, the method of determining a configuration of the tool 10 according to embodiments may be performed in the tool 10 or in the cloud server 30 (or even in combination where some steps are performed in one device and others are performed in the other). Thus, the tool 10 is typically equipped with a control device 20 and the cloud server 30 comprises a similar control device 35 housing the same or similar data processing components, as will be described in the following.

The steps of the method to be described in the following as performed by the tool 10 and/or the cloud server 30 are in practice performed by a control device 20 and/or 35, respectively, comprising a processing unit 17, 32 embodied in the form of one or more microprocessors arranged to execute a computer program 18, 33 downloaded to a storage medium 19, 34 associated with the microprocessor, such as a Random Access Memory (RAM), a Flash memory or a hard disk drive. The processing unit 17, 32 is arranged to cause the tool 10 and/or cloud server 30 to carry out the method according to embodiments when the appropriate computer program 18, 33 comprising computer-executable instructions is downloaded to the storage medium 19, 34 and executed by the processing unit 17, 32. The storage medium 19, 34 may also be a computer program product comprising the computer program 18, 33. Alternatively, the computer program 18 may be transferred to the storage medium 19, 34 by means of a suitable computer program product, such as a Digital Versatile Disc (DVD) or a memory stick. As a further alternative, the computer program 18, 33 may be downloaded to the storage medium 19, 34 over a network. The processing unit 17, 32 may alternatively be embodied in the form of a digital signal processor (DSP), an application specific integrated circuit (ASIC), a field-programmable gate array (FPGA), a complex programmable logic device (CPLD), etc. The control device 20, 35 is communicatively connected to the interface for external communication, for instance from the tool 10 to the cloud server 30 and vice versa.

The control device 20 may be arranged inside the tightening tool 10 or in connection to the tool 10, for instance as a control device 20 attached to an external side of the main body 11 of the tool 10.

The processing unit 17 is in communicative connection with one or more internal sensors (not shown) for measuring the torque applied to the bolt 25 and a rotation angle of the output shaft 13 of the tightening tool 10 upon applying the torque, as well as a sensor measuring current consumption of the tool 10.

Now, for a tool such as the tightening tool 10, it is desirable to determine if the tool 10 is subjected to wear such that a maintenance session can be scheduled for the tool 10 before the wear becomes severe and ultimately causes tool breakdown.

In an embodiment, to determine that the tool 10 is subjected to wear, and further the severity of the wear, the control device 20 is configured to acquire data representing at least two operational parameters of the tool 10.

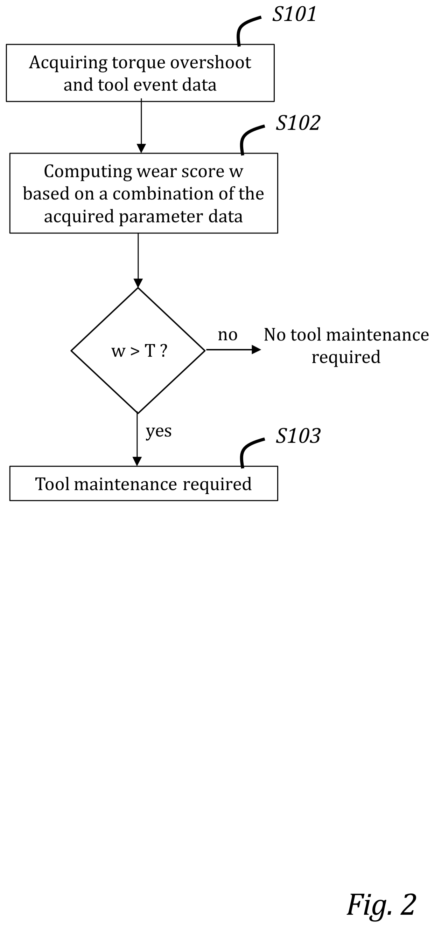

Figure 2 shows a flowchart illustrating a method of detecting that a tightening tool should be subjected to maintenance according to this embodiment.

A tool wear indicator referred to as a *wear score* w will be computed based on the acquired parameter data. In the exemplifying embodiments set forth in the below, a wear score of w = 0 indicates a fully functioning tool 10, i.e. either a completely new tool 10 or a tool 10 just having undergone a maintenance session, while a wear score of w = 100 indicates that the tool 10 immediately should be taken out of production for maintenance. As is understood, a wear score of, say, 80-90 may result in an operator of the tool 10 being alerted that scheduling of a tool maintenance session is advisable.

In an example embodiment, the control device 20 acquires data in S101 indicating torque applied by the tool 10 to a bolt 25 in relation to a target torque that the tool 10 is configured to apply to the bolt 25.

For instance, assuming that the tool 10 is configured to apply a target torque of 100 Nm to the bolt 25, while the values of the applied torque acquired by the tool 10 indicates that in practice, there is commonly a slight overshoot in the torque being applied, and further that there is an upward trend in overshoot torque values. For instance, a first torque value indicates 101 Nm, a second value indicates 102 Nm, a third value indicates 103 Nm, and so on.

In such a scenario, the upward trend occurring in torque overshoot may indicate that the tool 10 is starting to wear, as can be concluded from deteriorating precision reflected by the upward overshoot trend, and preferably should be scheduled to undergo maintenance.

Thus, if the tool 10 repeatedly overshoots upon applying the torque in relation to the target torque of 100 Nm - and further that there is an upward overshoot trend - the control device will compute the wear score w based on the detected torque overshoot. In an example, assuming that for five consecutive tightening operations, the tool 10 overshoots and applies a torque of approximately 101 Nm, 102 Nm, 103 Nm, 104 Nm and 105 Nm each overshoot will add a factor 10 to the wear score w, i.e. w = 50, computed in S102.

At this stage, even if it may be envisaged that an operator of the tool 10 is alerted if a given number of consecutive tightening operations have resulted in an steadily increasing overshoot of the target torque, such an alert may be considered vague and unprecise - and may not be relied upon - given that only a single operational parameter is taken into consideration for computing the wear score w.

Advantageously, with embodiments described herein, the control device 20 will monitor at least one further operational parameter of the tool 10.

For instance, in addition to considering an operational parameter of the tool 10 in the form of an upward trend in torque overshoot, a tool event referred to as "tool overheated" will further be considered. As is understood, there are numerous tool events which may be considered, wherein "tool overheated" is one example. As the name implies, if the temperature of tool 10 exceeds an upper temperature value, then that may in itself indicate that the tool 10 has started to wear.

Hence, in an embodiment, in addition to registering overshoots, the control device 20 acquires tool event data in S101, i.e. information indicating whether the temperature of the tool 10 exceeds the upper temperature value (and thus is overheated) upon performing the tightenings.

Thereafter, the wear score w is in S102 computed where for each upward trending overshoot it is further determined if any of the overshoot tightenings have been performed with the tool 10 being overheated. Any such overshoot tightening performed by an overheated tool 10 will result in an increase of the wear score w. For instance, with each upward trending overshoot (and overheat) tightening, the wear score w will be incremented with 10 (i.e. in this example effectively giving an overshoot tightening twice the weight upon computing the wear score if the tool is overheated).

If all the above five overshoot tightenings would be overheat tightenings, the wear score w would be computed to 100 instead of 50 as in the previous example (in which scenario the tool 10 immediately should be taken out of production).

In this example, assuming that three of the five overshoot tightenings are overheat tightenings, then the wear score w may be computed in S102 as w = 5*10 + 3*10 = 80. If it further is assumed that the wear score w should exceed a maintenance threshold value T of, say, 79 for the control device 20 to determine in S103 that tool maintenance should be scheduled (thus deeming each wear score from 80 and up to indicate that maintenance is required), then in this case the control device 20 indeed concludes in S103 that tool maintenance is required since w > T.

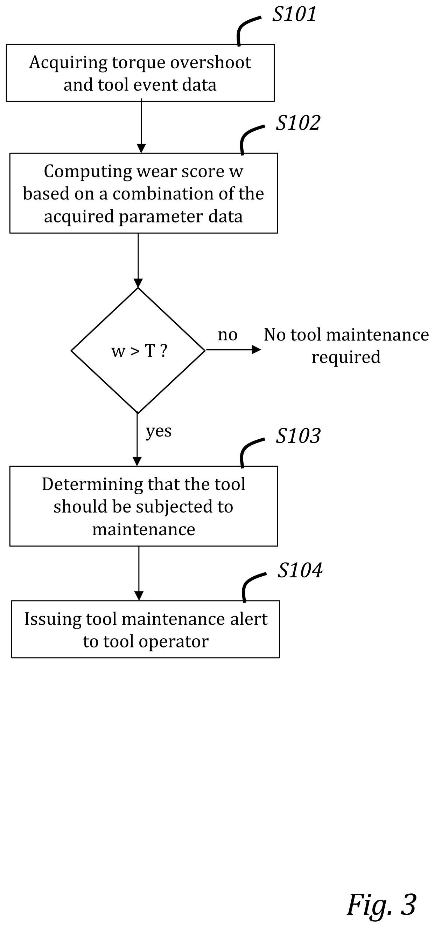

As shown in Figure 3, a maintenance alert is issued in S104 to an operator of the tool 10. For instance, such a maintenance alert may be issued to the operator of the tool 10 via the tool display 14.

Advantageously, with the above-described embodiment, by taking into account a plurality of operational parameters of the tool 10 for computing the wear score w, the determining that maintenance is required (and the alert optionally being issued accordingly) will be considered to have a greater weight as compared to an alert issued based on a single operational parameter. Thus, a fuller and more complete view of the health of the tool 10 is advantageously provided with this embodiment.

In an embodiment, the maintenance threshold value is dynamically adjusted based on e.g. environmental conditions or specific tool applications. For instance, assuming that the tool 10 is operated in an environment where the temperature is high or if a specific tool application is particularly demanding, it may be advisable to lower the maintenance threshold to detect early occurrences of wear

A further advantage is that specific parts or components of the tool 10 may be pinpointed by means of different operational parameters of tool 10 being considered for computing the wear score.

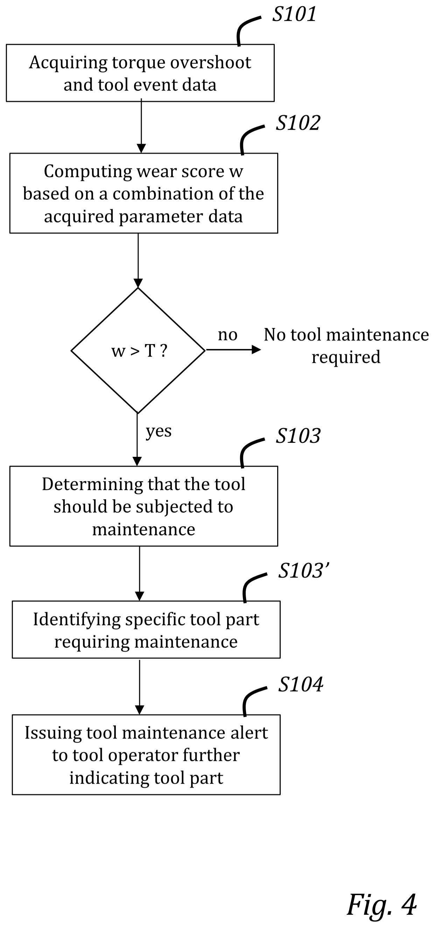

Figure 4 illustrates an embodiment, wherein after having determined in S103 that maintenance of the tool 10 indeed is required, the control device 20 proceeds in S103' to identify, based on the selected operational parameters ("overshoot torque" and "tool overheated"), which part(s) of the tool 10 should be served when performing the maintenance on the tool 10.

For instance, in the above example where the control device 20 combines the operational parameters "overshoot torque" and "tool overheated" for computing the wear score w in S102 and proceeds to alert the operator in S104 if the value of the computed wear score exceeds a maintenance threshold T, the specific operational parameters being taken into consideration may e.g. indicate that an incorrect tool software configuration has been performed or that the tool head 12 and/or output shaft 13 should be considered for servicing as determined in S103'.

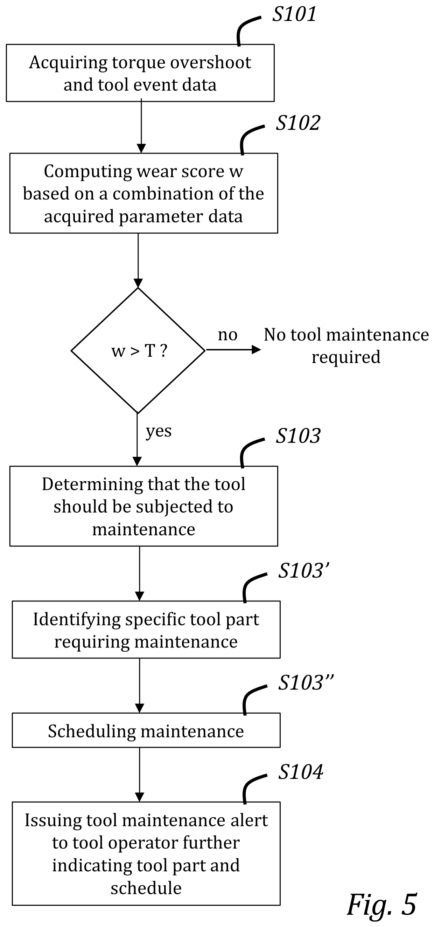

Further, as illustrated in Figure 5, the control device 20 may in an embodiment suggest scheduling the maintenance session to be performed at a given point in time, or after a given number of further tightenings, depending on the computed wear score w and the set maintenance threshold T.

In the above example, while the current wear score w = 80 exceeds the set maintenance threshold T = 79 (where a value of 100 would indicate immediately taking the tool 10 out of production for maintenance), immediate maintenance is not strictly required. Rather, it may be that the control device 20 proposes in S103" a maintenance schedule that preferably should be complied with. For instance, in case of a wear score of w = 80, the control device 20 may propose scheduling of maintenance such that the maintenance is performed e.g. within the next 1000 tightenings or within the next coming week.

In a further embodiment, more predictable operational parameters may be considered, such as e.g. "time since last maintenance" and/or "number of tightenings performed since last maintenance". Thus, these parameters change in a predictable manner from one tightening to the other (as is typically not the case with torque overshoot and events indicating whether or not a tightening tool is overheated).

Assuming for instance with reference to the example described hereinabove, that the control device 20 acquires operational data indicating three consecutive overshoot tightening resulting in a wear score w = 3*10 = 30, where acquired operational data further indicates that two of the overshoot tightenings are performed with the tool 10 being overheated, which results in a wear score of w = 3*10 + 2*10 = 50 based on a combination of the two operational parameters "overshoot torque" and "tool overheated". If a maintenance threshold value of T = 79 is applied as in the previous example, then such a scenario would not result in a maintenance alert being issued.

However, taking into consideration the two further operational parameters "time since last maintenance" and "number of tightenings performed since last maintenance", the wear score w may change depending on the status of the two further parameters.

Assuming in this example that the tool is scheduled for maintenance once every 12 months and/or after 250,000 tightenings have been performed. In other words, 12 months passing will result in a wear score of 100 while 250.000 tightenings also will result in a wear score of 100. Hence, each month passing since the last maintenance session will result in adding 100/12 = 8.33 to the wear score, while for each 1000 tightenings having been performed since the late maintenance session 100/250 should be added to the wear score.

If in this example, one month is assumed to have passed since the last maintenance session, and 40.000 tightening have been performed, the new wear score w combining all four operational parameters "overshoot torque", "tool overheated", "time since last maintenance" and "number of tightenings performed since last maintenance" will be computed as w = max(overshoot + overheat, time, tightenings) = max(3*10 + 2*10, 100/12, 100*40/250) = 50. Hence, the threshold T is still not exceeded after the relatively short time since maintenance. Rather, with these parameters, for the threshold T to be exceed, either around 10 months must have passed and/or 200.000 tightenings must have been performed since the last maintenance session, given that the combination of overshoot and overheat amounts to 50. Thus, after 10 months and/or 200.000 tightenings, the wear score w will exceed T even if no overshoots are detected.

Advantageously, an even more distinct and clear view is acquired as regards the health of the tool 10 by selecting even further operational parameters to serve as a basis for computing the wear score w. Thus, even if none of the individual parameters would indicate that a maintenance alert should be issued, the combination of the operational parameters may well result in the issuing of a maintenance alert.

As is understood, there are numerous potential operational parameters of the tool 10 to be considered, e.g. degree of vibration of the tool 10 upon performing the tightenings, temperature, noise levels, rotational speed, etc., or even further tool events such as e.g. "torque transducer error" or "tool motor current high", where generally high levels/values may indicate wear or even tool breakage.

For example, it is known that the measured torque of the tool 10 ideally should be directly proportional to the consumed current during the part of the tightening operation where the speed of the tool is relatively constant. When the tool 10 is starting to wear, the drive motor 16 of the tool will typically become less efficient and thus consume more current/energy. Other parts of the tool 10 such as angle gears may also become heavier for the motor 16 to operate, also leading to increased energy consumption for the same tightening result. When the tool 10 is starting to wear down, the current consumption will increase. Hence, the current being consumed by the tool 10 is a further operational parameter to be potentially considered.

In yet an embodiment, operational parameters deducted from a process referred to as Palmgren-Miner is considered as will be described in the following.

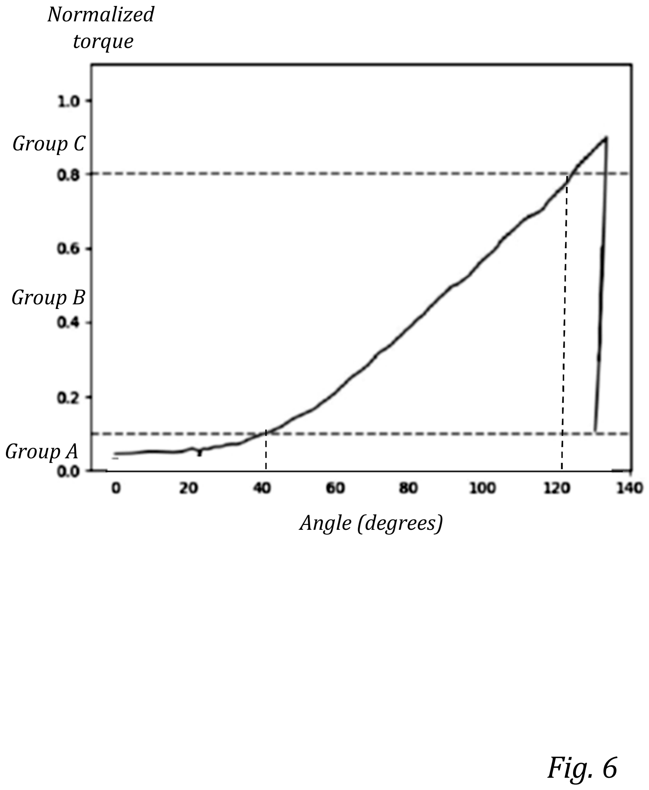

Figure 6 illustrates a curve referred to as a tightening trace of a tightening operation performed by the tool 10, which trace is formed by data indicating torques and corresponding rotation angles applied to the bolt 25 during the tightening operation. As previously mentioned, such data may be collected by sensors in the tool 10. The tightening trace of Figure 6 may be made up or tens or even hundreds of torque samples (and corresponding angle samples) being collected by the tool 10 during a tightening operation.

In the tightening trace of Figure 6, each applied torque during the tightening operation is normalized with a maximum supported torque of the tool 10. In other words, assuming that the maximum torque that can be applied by the tool 10 is 100 Nm, an applied torque of 100 Nm would be represented by 1, an applied torque of 50 Nm would be represented by 0.5, and so on.

In the graph of Figure 6, the applied torque is divided into three different groups A, B, C. As is understood, this is for illustrational purposes only, and the applied torque may be divided in more groups than three.

The torque applied by a tool 10 will typically be configured to vary throughout the tightening. Hence, during one tightening operation, the tool 10 first applies a torque associated with group A, then a torque associated with group B, and finally a torque associated with group C, each with corresponding rotation angles. Each tightening operation being performed results in a new tightening trace being generated. The well-established Palmgren-Miner model assumes that wear on a tool 10 is higher if the tool 10 applies a torque closer to its maximum supported torque as compared to when the tool 10 applies a lower torque.

Using the Palmgren-Miner model, by collecting tightening traces from a great number of tools (in practice hundreds or even thousands of tools), it is possible to compute an operational parameter $N_A$, $N_B$, $N_C$ for each respective torque group A, B, C that indicates total rotation angle that can be applied by a fully functioning tool before a next tool maintenance session is required, if the tool is only operated to apply torques corresponding to the respective torque group A, B, C. This is typically performed by a central device, such as cloud server 30, capable of communicating with a great number of tools. The computed operational parameters $N_A$, $N_B$, $N_C$ may then be communicated to the central device 20 of the tool 10 thereby enabling the tool 10 to take the parameters $N_A$, $N_B$, $N_C$ into consideration when computing the wear score w.

With the Palmgren-Miner model, a tool wear metric is estimated as (in the case of using three torque groups A, B, C):

$$tool\ wear\ metric = \frac{n_A}{N_A} + \frac{n_B}{N_B} + \frac{n_C}{N_C}$$

where $n_A$, $n_B$, $n_C$ indicates the actual rotation angle that has been applied in each torque group A, B, C since the last instant in time when the tool 10 was fully functioning.

For a brand-new tool, or a tool that is fully functioning after having undergone maintenance, the above tool wear being computed in accordance with Palmgren-Miner is 0, while if the Palmgren-Miner tool wear equals 1, tool maintenance should be immediately conducted.

Thus, the operational parameters $N_A$, $N_B$, $N_C$ estimated by means of utilizing Palmgren-Miner may in an embodiment further be considered when computing the tool wear score w, wherein the addition of the above Palmgren-Miner tool wear metric utilizing operational parameters $N_A$, $N_B$, $N_C$ to the wear score w computed in embodiments will - as illustrated with the tool wear metric computation above - be closer to 0 if the tool 10 recently have been subjected to maintenance, since the total rotation angle having applied to the bolt 25 at that stage is small. In contrast, if the tool 10 have been abundantly used since its last maintenance, the addition of the above Palmgren-Miner tool wear metric utilizing operational parameters $N_A$, $N_B$, $N_C$ to the wear score w will be closer to 1 (in this example rescaled to 100 to fit the wear score w indicating immediate maintenance when reaching 100), since the total rotation angle having been applied to the bolt 25 for each torque group A, B, C in such case is large.

In an embodiment, a trained machine-learning (ML) model or artificial intelligence (AI) is used to determine from the acquired data representing two or more operational parameters of the tool 10 whether or not the tightening tool 10 should be subjected to maintenance, as this is a task well-suited for ML and/or AI.

Another example of how to combine the operational parameters is to use an ensemble method, where each operational parameter is given one vote when determining if maintenance is needed for a particular tool or not. The confidence when estimating wear is then increased for each parameter that concludes that maintenance is needed. For example, if again the four operational parameters "overshoot torque", "tool overheated", "time since last maintenance" and "number of tightenings performed since last maintenance" are considered, where the "overshoot" parameter in this example is 81, the "tool overheated" parameter is 80, the "time" parameter is 45 and the "tightenings" parameter is 60, there are two parameters that are above T = 79, thus indicating that maintenance should soon be performed. To combine these parameters to one final score w, the maximum value is selected, in this case 81. That number may then be multiplied by a variable that changes depending on the number of parameters being above the threshold T = 79. It could be defined as 81 * (1 + (number of parameters > 79) * 0.1). Hence, in this example the wear score becomes w = 81*1.2 = 97. Advantageously, as can be concluded from this embodiment, the wear score increase if a plurality of parameters indicate that maintenance should be scheduled.

Yet another example of how to combine the operational parameters is to treat them as features in a machine learning problem. By collecting data concerning the actual status of each tool, a supervised learning algorithm can be trained to give a classification of the status of the tool given the operational parameters as input. As an example, if the training data consists of historical service performed (containing actual status of the tool and any spare parts used) on a high number of tools where historical data for each tool is available, a machine learning model such as a random forest classifier, can be trained to predict the current status of the tool, and also identify potential parts that need to be replaced. The features, or inputs, to the algorithm are then the operational parameters calculated from the historical data of each individual tool.

Any such ML and/or AI operations, as well as the performing of the steps of the method according to embodiments may be performed locally by the control device 20, or by the cloud server 30. The determining of whether or not maintenance should be performed may be immediately communicated to the operator of the tool 10 via e.g. the display 14. As a consequence, the operator may unscrew the bolt 25 and perform a new tightening program in order to attain an adequate tightening should the tool 10 be indicated to be faulty.

It is envisaged that the steps of the method according to embodiments may be performed by the control device 20 arranged in the tool 10 itself. However, it may also be envisaged that data is acquired by the tool 10 and then communicated via wireless transmitter to the cloud server 30 being equipped with a corresponding control device 35 for performing all the steps of the method, which would relieve the processing unit 17 of the tool 10 from the computational burden.

The aspects of the present disclosure have mainly been described above with reference to a few embodiments and examples thereof. However, as is readily appreciated by a person skilled in the art, other embodiments than the ones disclosed above are equally possible within the scope of the invention, as defined by the appended patent claims.

Thus, while various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

**Claims**

1. A method of a device (20, 35) of detecting that a tightening tool (10) should be subjected to maintenance, the method comprising:

   acquiring (S101) data representing at least two selected operational parameters of the tightening tool (10);
   computing (S102) a tool wear indicator (w) based on a combination of the acquired parameter data; and
   determining (S103) that the tightening tool (10) should be subjected to maintenance in response to the tool wear indicator (w) exceeding a set maintenance threshold value (T).

2. The method of claim 1, further comprising:
   issuing (S104) an alert indicating that the tool (10) should be subjected to maintenance.

3. The method of any one of the preceding claims, further comprising:
identifying (S103') one or more specific tool parts that should be subjected to maintenance based on the selected operational parameters of the tightening tool (10).

4. The method of any one of the preceding claims, further comprising:
scheduling (S103") the maintenance based on an extent to which the computed wear score (w) exceeds the set maintenance threshold value (T).

5. The method of claim 4, wherein the scheduling (S103") comprises indicating a maximum number of tightenings to be performed, or a maximum time period elapsing, before the tightening tool (10) should be subjected to maintenance.

6. The method of any one of the preceding claims, wherein the determining (S103) that the tightening tool (10) should be subjected to maintenance comprises determining that immediate maintenance should be performed if the computed tool wear indicator (w) reaches a predetermined upper value.

7. The method of any one of the preceding claims, wherein the computing (S102) of the tool wear indicator (w) comprises computing a first wear score based on acquired data representing a first of the at least two selected operational parameters, and computing a second wear score based on acquired data representing a second of the at least two selected operational parameters, wherein the tool wear indicator (w) is computed (S102) based on a combination of the first wear score and the second wear score.

8. The method of claim 7, wherein the tool wear indicator (w) is computed (S102) by adding the first wear score and the second wear score.

9. The method of claim 2, wherein the alert is provided to an operator of the tightening tool (10) via a tool interface (14).

10. The method any one of the preceding claims, wherein the maintenance threshold value (T) is dynamically adjusted based on environmental conditions or specific tightening tool applications.

11. The method any one of the preceding claims, wherein the at least two selected operational parameters of the tightening tool (10) comprise two or more of: applied torque, applied rotation angle, overshoot of torque with respect to a desired target torque, consumed tool current, tool temperature, degree of vibrations or noise of the tool, tool events, computed Palmgren-Minter tool wear metrics.

12. The method of any one of the preceding claims, wherein in case two or more of the selected operational parameters of the tightening tool (10) individually results in tool wear indicator (w) exceeding the set maintenance threshold value (T), a weighting factor is selected for further increasing the tool wear indicator (w).

13. A computer program (18, 33) comprising computer-executable instructions for causing a device (20, 35) to perform steps recited in any one of claims 1-12 when the computer-executable instructions are executed on a processing unit (17, 32) included in the device (20, 35).

14. A computer program product comprising a computer readable medium (19, 34), the computer readable medium having the computer program (18, 33) according to claim 13 embodied thereon.

15. A device (20, 35) configured to detect that a tightening tool (10) should be subjected to maintenance, the device (20, 35) comprising a processing unit (17, 32) operative to cause the device (20, 35) to:

   acquire (S101) data representing at least two selected operational parameters of the tightening tool (10);
   compute (S102) a tool wear indicator (w) based on a combination of the acquired parameter data; and
   determine (S103) that the tightening tool (10) should be subjected to maintenance in response to the tool wear indicator (w) exceeding a set maintenance threshold value (T).

Fig. 1

*S101*

Acquiring torque overshoot
and tool event data

*S102*

Computing wear score w
based on a combination of the
acquired parameter data

w > T ?

no → No tool maintenance
required

yes

*S103*

Tool maintenance required

*Fig. 2*

*S101*

Acquiring torque overshoot
and tool event data

*S102*

Computing wear score w
based on a combination of the
acquired parameter data

w > T ?  →  no  →  No tool maintenance
required

yes

*S103*

Determining that the tool
should be subjected to
maintenance

*S104*

Issuing tool maintenance alert
to tool operator

*Fig. 3*

S101

Acquiring torque overshoot
and tool event data

S102

Computing wear score w
based on a combination of the
acquired parameter data

w > T ?

no → No tool maintenance
required

yes

S103

Determining that the tool
should be subjected to
maintenance

S103'

Identifying specific tool part
requiring maintenance

S104

Issuing tool maintenance alert
to tool operator further
indicating tool part

*Fig. 4*

*S101*

Acquiring torque overshoot
and tool event data

*S102*

Computing wear score w
based on a combination of the
acquired parameter data

w > T ?

no → No tool maintenance
required

yes

*S103*

Determining that the tool
should be subjected to
maintenance

*S103'*

Identifying specific tool part
requiring maintenance

*S103"*

Scheduling maintenance

*S104*

Issuing tool maintenance alert
to tool operator further
indicating tool part and
schedule

*Fig. 5*

*Fig. 6*

Europäisches
Patentamt

European
Patent Office

Office européen
des brevets

# EUROPEAN SEARCH REPORT

**Application Number**

EP 25 21 9733

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/150615 A1 (JOUSSET NICOLAS [FR]) 14 May 2020 (2020-05-14)<br>* abstract *<br>* claims 1-6,9-11,14-15 *<br>* figures 1-4, 5.1, 5.2, 5.3 *<br>* paragraph [0001] – paragraph [0002] *<br>* paragraph [0004] – paragraph [0010] *<br>* paragraph [0013] *<br>* paragraph [0021] *<br>* paragraph [0046] *<br>* paragraph [0049] *<br>* paragraph [0083] *<br>* paragraph [0089] *<br>* paragraph [0091] – paragraph [0097] *<br>* paragraph [0107] – paragraph [0112] *<br>* paragraph [0115] *<br>* paragraph [0164] *<br>* paragraph [0195] – paragraph [0196] *<br>* paragraph [0211] – paragraph [0216] *<br>* paragraph [0219] – paragraph [0227] *<br>* paragraph [0120] *<br>* paragraph [0117] *<br>----- <br>-/-- | 1-15 | INV.<br>B25B23/147<br>G05B19/4065 |

|  |  |
|---|---|
| | **TECHNICAL FIELDS SEARCHED (IPC)**<br>B25B<br>G05B<br>B23P |

The present search report has been drawn up for all claims

| Place of search | Date of completion of the search | Examiner |
|---|---|---|
| Munich | 9 April 2026 | Heinzelmann, Eric |

EPO FORM 1503 03.82 (P04C01)

page 1 of 5

Europäisches
Patentamt

European
Patent Office

Office européen
des brevets

**EUROPEAN SEARCH REPORT**

Application Number

EP 25 21 9733

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/072480 A1 (ATLAS COPCO IND TECHNIQUE AB [SE]) 4 May 2023 (2023-05-04) <br> * claims 1-3,5-8,15-17 * <br> * figures 1, 2a, 2b, 2c, 2d, 3, 6-9 * <br> * paragraph [0001] - paragraph [0026] * <br> * paragraph [0030] - paragraph [0035] * <br> * paragraph [0038] - paragraph [0041] * <br> * paragraph [0044] * <br> * paragraph [0045] * <br> * paragraph [0048] - paragraph [0051] * <br> * paragraph [0055] - paragraph [0058] * <br> * paragraph [0065] * <br> * paragraph [0067] - paragraph [0073] * <br> * paragraph [0077] * <br> * paragraph [0078] * <br> * paragraph [0081] - paragraph [0085] * <br> * paragraph [0087] - paragraph [0088] * <br> * paragraph [0091] - paragraph [0094] * <br> * paragraph [0103] * <br> * paragraph [0104] * <br> * paragraph [0106] * <br> * paragraph [0111] * <br> * paragraph [0112] * <br> * paragraph [0114] - paragraph [0127] * <br> * paragraph [0130] - paragraph [0135] * <br> * paragraph [0139] * <br> ----- <br> -/-- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 9 April 2026 | Heinzelmann, Eric |

EPO FORM 1503 03.82 (P04C01)

Europäisches
Patentamt

European
Patent Office

Office européen
des brevets

## EUROPEAN SEARCH REPORT

**Application Number**

EP 25 21 9733

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/271580 A1 (MARIE VINCENT [FR] ET AL) 6 November 2008 (2008-11-06)<br>* abstract *<br>* claims 1-6, 10, 11 *<br>* figures 1-3 *<br>* paragraph [0002] *<br>* paragraph [0003] *<br>* paragraph [0007] *<br>* paragraph [0019] *<br>* paragraph [0026] – paragraph [0039] *<br>* paragraph [0048] *<br>* paragraph [0049] *<br>* paragraph [0052] *<br>* paragraph [0053] *<br>* paragraph [0057] – paragraph [0059] *<br>* paragraph [0062] *<br>* paragraph [0063] *<br>* paragraph [0065] – paragraph [0067] *<br>* paragraph [0069] *<br>* paragraph [0074] *<br>* paragraph [0075] *<br>* paragraph [0078] *<br>* paragraph [0079] *<br>* paragraph [0088] *<br>-----<br>-/-- | 1-15 | |

TECHNICAL FIELDS
SEARCHED (IPC)

The present search report has been drawn up for all claims

| Place of search | Date of completion of the search | Examiner |
|---|---|---|
| Munich | 9 April 2026 | Heinzelmann, Eric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                          

& : member of the same patent family, corresponding document

EPO FORM 1503 03.82 (P04C01)

**EP 4 751 851 A1**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/199416 A1 (BOISARD SIMON [FR] ET AL) 1 July 2021 (2021-07-01)<br>* abstract *<br>* claims 1, 4, 6, 8, 13 *<br>* figures 1-4, 5a, 5b *<br>* paragraph [0001] *<br>* paragraph [0002] *<br>* paragraph [0004] *<br>* paragraph [0010] *<br>* paragraph [0013] - paragraph [0015] *<br>* paragraph [0034] *<br>* paragraph [0065] *<br>* paragraph [0067] *<br>* paragraph [0070] *<br>* paragraph [0071] *<br>* paragraph [0121] - paragraph [0127] *<br>* paragraph [0161] - paragraph [0164] *<br>* paragraph [0308] *<br>* paragraph [0309] *<br>* paragraph [0266] *<br><br>- - - - -<br><br>-/-- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 9 April 2026 | Heinzelmann, Eric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

**page 4 of 5**

Europäisches
Patentamt

European
Patent Office

Office européen
des brevets

# EUROPEAN SEARCH REPORT

Application Number

EP 25 21 9733

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 501 745 A1 (RENAULT GEORGES ETS [FR]) 26 June 2019 (2019-06-26) <br> * claims 1-4, 12-14 * <br> * paragraph [0001] - paragraph [0013] * <br> * paragraph [0023] - paragraph [0024] * <br> * paragraph [0038] * <br> * paragraph [0046] - paragraph [0051] * <br> * paragraph [0055] - paragraph [0058] * <br> * paragraph [0068] - paragraph [0072] * <br> * paragraph [0074] - paragraph [0076] * <br> * paragraph [0078] - paragraph [0079] * <br> * paragraph [0092] * <br> * paragraph [0128] - paragraph [0132] * <br> * paragraph [0135] - paragraph [0136] * <br> * paragraph [0143] * <br> * paragraph [0150] * <br> * paragraph [0170] - paragraph [0173] * <br> * paragraph [0190] - paragraph [0194] * <br> * paragraph [0210] - paragraph [0212] * <br> * paragraph [0216] - paragraph [0231] * <br> * paragraph [0235] - paragraph [0236] * <br> * paragraph [0098] * <br> ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 9 April 2026 | Heinzelmann, Eric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 9733

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2026

| Patent document cited in search report | | Publication date | Patent family member(s) | | Publication date |
|---|---|---|---|---|---|
| US 2020150615 | A1 | 14-05-2020 | EP | 3650166 A1 | 13-05-2020 |
| | | | FR | 3088229 A1 | 15-05-2020 |
| | | | US | 2020150615 A1 | 14-05-2020 |
| WO 2023072480 | A1 | 04-05-2023 | CN | 118234598 A | 21-06-2024 |
| | | | EP | 4422831 A1 | 04-09-2024 |
| | | | KR | 20240090561 A | 21-06-2024 |
| | | | US | 2024335926 A1 | 10-10-2024 |
| | | | WO | 2023072480 A1 | 04-05-2023 |
| US 2008271580 | A1 | 06-11-2008 | CN | 101128286 A | 20-02-2008 |
| | | | EP | 1851008 A1 | 07-11-2007 |
| | | | FR | 2882287 A1 | 25-08-2006 |
| | | | JP | 4966209 B2 | 04-07-2012 |
| | | | JP | 2008531303 A | 14-08-2008 |
| | | | US | 2008271580 A1 | 06-11-2008 |
| | | | WO | 2006089925 A1 | 31-08-2006 |
| US 2021199416 | A1 | 01-07-2021 | EP | 3842185 A1 | 30-06-2021 |
| | | | FR | 3105750 A1 | 02-07-2021 |
| | | | US | 2021199416 A1 | 01-07-2021 |
| EP 3501745 | A1 | 26-06-2019 | EP | 3501745 A1 | 26-06-2019 |
| | | | FR | 3075678 A1 | 28-06-2019 |
| | | | JP | 7441603 B2 | 01-03-2024 |
| | | | JP | 2019113551 A | 11-07-2019 |

EPO FORM P0459

For more details about this annex : see Official Journal of the European Patent Office, No. 12/82